# EUROPÄISCHE PATENTSCHRIFT

(11) **EP 2 067 151 B1**
(45) Veröffentlichungstag und Bekanntmachung des Hinweises auf die Patenterteilung: **23.03.2011**
(21) Anmeldenummer: 07820644.8
(22) Anmeldetag: 27.09.2007
(51) Int. Cl.: H01G 9/00, H01G 9/155

(54) **ENERGIESPEICHERMODUL**
ENERGY STORAGE MODULE
MODULE D'ACCUMULATION D'ÉNERGIE

(30) Priorität: 28.09.2006 DE 102006046042
(43) Veröffentlichungstag der Anmeldung: 10.06.2009
(73) Patentinhaber: SIEMENS AKTIENGESELLSCHAFT, 80333 München (DE)
(72) Erfinder: EBELING, Hans Heinrich, 76135 Karlsruhe (DE); EHRHARDT, Walter, 75203 Königsbach-Stein (DE); FUCHS, Andreas, 91056 Erlangen (DE); GAUDENZ, Markus Matthias, 91056 Erlangen (DE); HAHN, Alexander, 91341 Röttenbach (DE); KESSLER, Armin, 75239 Eisingen (DE); NEUTZ, Jochen, 76135 Karlsruhe (DE); RECHENBERG, Karsten, 91077 Dormitz (DE); WAIDHAS, Manfred, 90427 Nürnberg (DE)
(86) Internationale Anmeldenummer: PCT/EP2007/060253
(87) Internationale Veröffentlichungsnummer: WO 2008/037763

(56) Entgegenhaltungen:
- EP-A- 0 322 551
- DE-A1- 19 918 090
- JP-A- 1 297 812

## Beschreibung

Die Erfindung bezieht sich auf ein Energiespeichermodul gemäß dem Oberbegriff des Patentanspruches 1.

Energiespeichermodule sind vom Stand der Technik bekannt, wozu beispielsweise auf die nicht vorveröffentlichte deutsche Patentanmeldung DE 10 2005 041 604 A1 der Anmelderin mit der Bezeichnung "Vorrichtung mit wenigstens einem Doppelschichtkondensator" verwiesen wird. Derartige Energiespeichermodule umfassen ein Gehäuse mit darin angeordneten Bauelementen, beispielsweise Kondensatoren, in denen ein brennbarer organischer Elektrolyt vorhanden ist. Ein solcher Elektrolyt kann unter ungünstigen Randbedingungen eine Explosion oder eine Verpuffung hervorrufen.

In Kondensatoren, insbesondere Doppelschichtkondensatoren, aber auch Elektrolytkondensatoren, und Lithiumbatterien finden vorrangig organische Elektrolyte Verwendung, die bei Austritt im Fehler- bzw. Schadensfall eine potentielle Brand- oder gar Explosionsgefahr darstellen. Teilweise besitzen diese organischen Elektrolyte auch einen niedrigen Dampfdruck. Um einen übermäßigen Druckanstieg und damit ein Öffnen der Zelle möglichst zu vermeiden, finden auch höhersiedende Elektrolyte Verwendung. Bauteile mit solchen Elektrolyten sind dann allerdings für den Einsatz bei extrem niedrigen Temperaturen unbrauchbar.

Bei heutigen Hochleistungssystemen, die leicht brennbare Elektrolyte verwenden, wird daher die passive Sicherheit durch umfangreiche Sicherheitsvorrichtungen, beispielsweise redundante elektronische Überwachungseinrichtungen, gesteigert oder es werden Einbauorte gewählt, wo entweder kritische Umgebungsbedingungen ausgeschlossen werden können oder wo ein Schadensablauf, z. B. ein Brand oder eine Explosion, keinen Personenschaden verursachen kann.

Letzteres bedeutet, dass die beschriebenen Systeme oft nicht am funktionell an sich günstigen Ort platziert werden können.

Bei einem typischen Schadensfall lassen die Module mit gasförmigem Elektrolyt versetzte Luft an die Umgebung. Es muss durch zügige Abführung eine kritische Konzentration des gasförmigen Elektrolyten ausgeschlossen werden.

In der aktuellen technischen Entwicklung besteht das Bestreben bereits darin, die Energiespeichermodule eigensicher zu gestalten, so dass kein Fehlerfall auftreten kann. Dafür sind in der eingangs genannten Patentanmeldung der Anmelderin bereits verschiedene Vorschläge gemacht.

Aus der DE 101 57 272 C2 ist eine Lithium- oder Lithium-Ionen-Batterrie bekannt, bei der im zugehörigen Gehäuse ein nicht brennbares Sorptionsmittel vorhanden ist. Weiterhin sind aus der DE 101 28 672 A1 und aus der DE 10 2005 007 607 A1 Kondensatoranordnungen bekannt, die im Gehäuse jeweils Kondensatoremissionen absorbierende Medien aufweisen, welche sich am Boden des Gehäuses befinden EP 0 322 551 zeigt ein Energiespeichermodul gemäß den Oberbegriff des Patentanspruchs 1.

Aufgabe der Erfindung ist es demgegenüber, die Eigensicherheit von Energiespeichermodulen oder Modulgehäusen, die Doppelschichtkondensatoren oder Elektrolytkondensatoren beinhalten, weiter zu verbessern, damit das gesamte System auch schärfere Sicherheitsanforderungen erfüllt. Es soll ein solches Energiespeichermodul geschaffen werden, bei dem das Modul günstiger verbaut werden kann bzw. dadurch auch der Einbau in solche Anlagen, die einen Personenkontakt haben, beispielsweise bei Eisenbahnen, zulässig wird.

Die Aufgabe ist erfindungsgemäß bei einem Energiespeichermodul der eingangs genannten Art durch die Merkmale des Patentanspruches 1 gelöst. Weiterbildungen sind in den Unteransprüchen angegeben.

Gegenstand der Erfindung ist ein Energiespeichermodul, bei dem im Fehlerfall, beispielsweise bei Überlastung oder bei einer mechanischen Beschädigung, das Füllmittel die freie Weglänge von austretenden Dämpfen begrenzt. Bei einer Zündung der Dämpfe wird so ein Rückzünden in die *Zelle und auch eine explosionsartige Flammausbreitung verhindert. Weiterhin wird der austretende Elektrolyt gebunden, wodurch eine Verminderung der Brandlast, z.B. durch umherspritzen vermieden wird. In Summe wird eine Brand- oder Explosionsneigung deutlich herabgesetzt. Das Füllmittel liegt dabei vorzugsweise als Schüttung von Materialien mit großer spezifischer Oberfläche, wie Zeolithe oder Aktivkohle, vor.

Für letzteren Zweck werden vorteilhafterweise die Freiräume zwischen den einzelnen Zellen und um die Zellen eines Moduls mit einer geeigneten Füllung versehen. Das dabei verwendete Füllmittel ist so gewählt, dass es die mittlere freie Weglänge von austretenden Gasen beschränkt und die Fähigkeit besitzt, die austretende Elektrolytmenge zu binden. Es wird also sowohl das Prinzip eines Zündschutzes realisiert als auch vorteilhafterweise eine sichere Adsorption der austretenden Gase gewährleistet.

Bei der Erfindung bleibt der Druckanstieg vorteilhafterweise innerhalb des Modulgehäuses im unkritischen Bereich und das gesamte Modul bleibt gasdicht verschlossen. Für den Fall, dass das Modulgehäuse zusätzlich mechanisch beschädigt sein sollte, sorgt die elektrolytbindende Füllung für eine Minimierung der auftretenden Elektrolytdämpfe und damit der Folgeschäden.

Wie bereits erwähnt, werden als Füllmittel für den bestimmungsgemäßen Zweck in vorteilhafter Weise Zeolithe oder Aktivkohle verwendet, die sich bekanntermaßen durch ihre Offenporigkeit und damit verbunden jeweils große spezifische Oberflächen auszeichnen. Als Maß dafür wird die sog. BET-Fläche angegeben, die > 20m²/g liegen sollte. Erfindungsgemäß weist das Füllmittel, insbesondere die Aktivkohle, zusätzlich an den Porenoberflächen eine katalytische Beschichtung auf. Als katalytische Beschichtung kommen vorzugsweise Edelmetalle, wie beispielsweise Platin oder Rhodium, in Frage. Durch eine solche Beschichtung können Reaktionen begünstigt werden, wodurch die entstehenden Gase langsam unter kontrollierten Temperaturverhalten abreagieren - z.B. langsam aufoxidiert werden. Damit wird einer schleichenden Druckentwicklung die zum aufplatzen des Modulgehäuses führen kann entgegengewirkt.

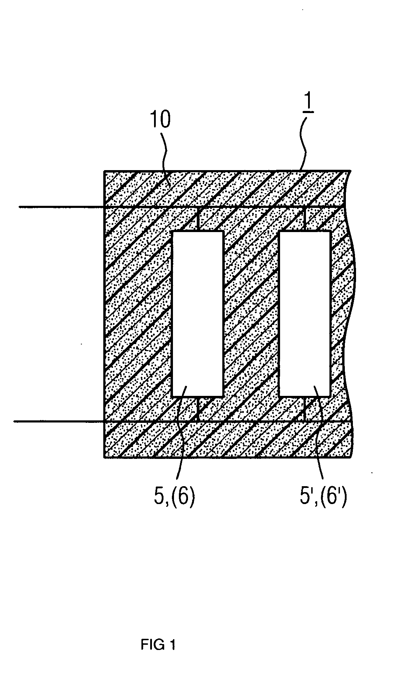

Weitere Einzelheiten und Vorteile der Erfindung ergeben sich aus der nachfolgenden Figurenbeschreibung von Ausführungsbeispielen anhand der Zeichnung in Verbindung mit den Patentansprüchen.

Die einzige Figur zeigt in grob schematischer Darstellung ein Energiespeichermodul mit darin befindlichen Bauteilen bzw. Bauelementen.

In der Figur ist ein Energiespeichermodul dargestellt, das im Wesentlichen aus einem nach außen hermetisch abgeschlossenen Gehäuse 1 besteht. Im Modulgehäuse 1 sind eine Anzahl von Kondensatoren als singuläre Zellen hintereinander geschaltet, die einen Energiespeicher zur bestimmungsgemäßen Anwendung in Industrieanlagen, insbesondere auch Fahrzeugen für den Personentransport, realisieren. Als Kondensatoren kommen insbesonder Doppelschichtkondensatoren 5 in Frage. Alternativ dazu können auch bekannte Elektrolytkondensatoren 6 verwendet werden. In der Figur sind speziell Doppelschichtkondensatoren 5, 5', 5'', ... angedeutet.

Die verwendeten Doppelschichtkondensatoren 5 oder Elektrolytkondensatoren 6, verwenden jeweils einen brennbaren organischen Elektrolyten. Dabei kann es im Schadensfall zu einem Brand, Explosion oder zumindest zu einer Verpuffung kommen. Es müssen daher geeignete Sicherheitsmaßnahmen geschaffen werden. Diese sollen das Prinzip der Eigensicherheit erfüllen, d.h. es dürfen keine weiteren Funktionselemente notwendig sein.

Es wird nunmehr vorgeschlagen, die Freiräume zwischen und um die einzelnen Zellen 5ᵢ oder 6ᵢ mit einem geeigneten Füllmaterial 10 zu versehen.

Aktivkohle ist porös sowie offenporig und hat daher eine große spezifische Oberfläche. Durch die Aktivkohle wird erreicht, dass sowohl die mittlere freie Weglänge von austretenden Gasen eingeschränkt wird. Damit wird ein Rückzündschutz erreicht.

Weiterhin hat speziell die Aktivkohle die Fähigkeit, die austretende Elektrolytmenge durch Adsorption und/oder Absorption zu binden. Somit wird erreicht, dass der Druckanstieg innerhalb des Modulgehäuses im unkritischen Bereich bleibt und das gesamte Energiespeichermodul gasdicht verschlossen ist. Dies gilt auch für den an sich unwahrscheinlichen Fall, dass das Gehäuse 1 des Energiespeichermoduls selbst beschädigt wird und Gas nach außen dringen könnte.

Durch die Aktivkohle ist daher eine Sicherung sowohl für einen flüssigen als auch für einen gasförmigen Elektrolyten gewährleistet. Erfindungsgemäß sind auch zusätzlich katalytische Beschichtungen an den freien Oberflächen des Füllmittels vorhanden. Als katalytische Beschichtungen kommen in bekannter Weise entweder Platin (Pt) oder Rhodium (Rh) in Frage. Alternativ zur Aktivkohle können Zeolithe verwendet werden, die große innere Oberflächen haben

Weiterhin kommen als alternative poröse Sorbtionsmittel Sepiolith und Tobermorit in Betracht.

Entscheidend ist bei den angegebenen Füllmitteln, dass eine im Wesentlichen adsorbierende Wirkung vorliegt, wofür eine große innere Oberfläche benötigt wird. Als Maß dafür wird die sog. BET(Brunauer, Emmett, Teller)-Fläche herangezogen, die größer als 20 m²/g sein sollte, vorzugsweise über 100m²/g. Dies muss durch entsprechende Auswahl beim genannten Zeolith, Sepiolith, Tobermorit und durch Aktivkohle sichergestellt werden. Erfindungsgemäß liegt dabei zusätzlich eine katalytische Beschichtung vor.

Letztere Materialien können als Füllmittel mit einer Schüttdichte > 0,3 g/cm³ in das Gehäuse eingebracht werden.

Durch die vorstehend beschriebene Ausgestaltung des Energiespeichermoduls kann mit passiven Mitteln und damit insbesondere kostengünstig und besonders zuverlässig die Eigensicherheit von Modulen mit Doppelschichtkondensatoren und Lithiumbatterien erhöht werden.

## Patentansprüche

1. Energiespeichermodul mit speicherbauelementen, die wenigstens einen organischen, brennbaren Elektrolyten enthalten, **dadurch gekennzeichnet, dass** ein Füllmittel (10) vorhanden ist, das die passive Sicherheit im Modulgehäuse (1), in dem sich Bauteile (5, 6, 7) mit dem brennbaren Elektrolyten befinden, erhöht wobei das Füllmittel (10) eine katalytische Beschichtung aufweist.

2. Energiespeichermodul nach Anspruch 1, **dadurch gekennzeichnet, dass** das Gehäuse (1) als Bauelemente Elektrolytkondensatoren (5, 5', ...) enthält.

3. Energiespeichermodul nach Anspruch 1, **dadurch gekennzeichnet, dass** das Gehäuse (1) als Bauelemente Doppelschichtkondensatoren (6, 6', ...) enthält.

4. Energiespeichermodul nach einem der vorhergehenden Ansprüche, **dadurch gekennzeichnet, dass** das Füllmittel (10) die mittlere freie Weglänge von austretenden Elektrolyt-Dämpfen begrenzt und damit eine Brand- oder Explosionsausbreitung im Gehäuse (1) verhindert.

5. Energiespeichermodul nach einem der Ansprüche 1, bis 4, **dadurch gekennzeichnet, dass** das Füllmittel (10) den austretenden Elektrolyt-Dampf durch Adsorption und/oder Absorption bindet.

6. Energiespeichermodul nach einem der vorhergehenden Ansprüche, **dadurch gekennzeichnet, dass** das Füllmittel (10) als Schüttung vorliegt.

7. Energiespeichermodul nach einem der vorhergehenden Ansprüche, **dadurch gekennzeichnet, dass** die Schüttung eine Partikelverteilung zwischen 0,5 und 5 mm und eine Schüttdichte von > 0,3g/cm³ hat

8. Energiespeichermodul nach einem der vorhergehenden Ansprüche, **dadurch gekennzeichnet, dass** das Füllmittel (10) eine BET-Oberfläche von wenigstens 20 m²/g hat.

9. Energiespeichermodul nach einem der vorhergehenden Ansprüche, **dadurch gekennzeichnet, dass** das Füllmittel 10 eine BET-Oberfläche von wenigstens 100 m²/g hat.

10. Energiespeichermodul nach einem der vorhergehenden Ansprüche, **dadurch gekennzeichnet, dass** die katalytische Beschichtung ein Edelmetall ist, vorzugsweise Platin (Pt) oder Rhodium (Rh).

11. Energiespeichermodul nach einem der vorhergehenden Ansprüche, **dadurch gekennzeichnet, dass** das Füllmittel (10) Aktivkohle ist, die eine BET-Oberfläche zwischen 500 und 2000 m²/g hat.

12. Energiespeichermodul nach Anspruch 11, **dadurch gekennzeichnet, dass** die Aktivkohle offenporig ist und die katalytische Beschichtung auf die Oberflächen der Aktivkohleporen aufgebracht ist.

13. Energiespeichermodul nach einem der vorhergehenden Ansprüche, **dadurch gekennzeichnet, dass** das Füllmittel (10) ein Zeolith ist.

14. Energiespeichermodul nach Anspruch 13, **dadurch gekennzeichnet, dass** das Füllmittel (10) Sepiolith ist

15. Energiespeichermodul nach Anspruch 13, **dadurch gekennzeichnet, dass** das Füllmittel (10) Tobermorit ist.

## Claims

1. Energy storage module comprising storage components containing at least one organic, combustible electrolyte, **characterized in that** a filler (10) is present, which increases the passive safety in the module housing (1) in which component parts (5, 6, 7) comprising the combustible electrolyte are situated, the filler (10) having a catalytic coating.

2. Energy storage module according to Claim 1, **characterized in that** the housing (1) contains electrolytic capacitors (5, 5', ...) as components.

3. Energy storage module according to Claim 1, **characterized in that** the housing (1) contains double-layer capacitors (6, 6', ...) as components.

4. Energy storage module according to any of the preceding claims, **characterized in that** the filler (10) limits the average free path length of emerging electrolyte vapors and thus prevents fire propagation or explosion propagation in the housing (1).

5. Energy storage module according to any of Claims 1 to 4, **characterized in that** the filler (10) binds the emerging electrolyte vapor by adsorption and/or absorption.

6. Energy storage module according to any of the preceding claims, **characterized in that** the filler (10) is present as a bed.

7. Energy storage module according to any of the preceding claims, **characterized in that** the bed has a particle distribution of between 0.5 and 5 mm and a bulk density of > 0.3 g/cm³_{.}

8. Energy storage module according to any of the preceding claims, **characterized in that** the filler (10) has a BET surface area of at least 20 m²/g.

9. Energy storage module according to any of the preceding claims, **characterized in that** the filler (10) has a BET surface area of at least 100 m²/g.

10. Energy storage module according to any of the preceding claims, **characterized in that** the catalytic coating is a noble metal, preferably platinum (Pt) or rhodium (Rh).

11. Energy storage module according to any of the preceding claims, **characterized in that** the filler (10) is activated carbon having a BET surface area of between 500 and 2000 m²/g.

12. Energy storage module according to Claim 11, **characterized in that** the activated carbon is open-pored and the catalytic coating is applied to the surfaces of the activated carbon pores.

13. Energy storage module according to any of the preceding claims, **characterized in that** the filler (10) is a zeolite.

14. Energy storage module according to Claim 13, **characterized in that** the filler (10) is sepiolite.

15. Energy storage module according to Claim 13, **characterized in that** the filler (10) is tobermorite.

## Revendications

1. Module d'accumulation d'énergie, comprenant des composants accumulateurs, qui contiennent au moins un électrolyte organique combustible, **caractérisé en ce qu'**il y a une charge ( 10 ) qui augmente la sécurité passive dans le boîtier ( 1 ) du module dans lequel se trouve des éléments ( 5, 6, 7) avec l'électrolyte combustible, la charge ( 10 ) comportant un revêtement catalytique.

2. Module d'accumulation d'énergie suivant la revendication 1, **caractérisé en ce que** le boîtier ( 1 ) contient comme composants des condensateurs ( 5, 5',... ) électrolytiques.

3. Module d'accumulation d'énergie suivant la revendication 1, **caractérisé en ce que** le boîtier ( 1 ) contient comme éléments des condensateurs ( 6, z,... ) à couche double.

4. Module d'accumulation d'énergie suivant l'une des revendications précédentes, **caractérisé en ce que** la charge ( 10 ) limite la longueur de libre parcours moyen de vapeurs d'électrolyte qui sortent et empêche ainsi une propagation d'incendie ou d'explosion dans le boîtier ( 1 ).

5. Module d'accumulation d'énergie suivant l'une des revendications 1 à 4, **caractérisé en ce que** la charge ( 10 ) fixe la vapeur d'électrolyte qui sort par adsorption et/ou absorption.

6. Module d'accumulation d'énergie suivant l'une des revendications précédentes, **caractérisé en ce que** la charge ( 10 ) se présente sous la forme d'un amas.

7. Module d'accumulation d'énergie suivant l'une des revendications précédentes, **caractérisé en ce que** l'amas a une répartition de particules comprise entre 0,5 et 5mm et une masse volumique apparente > 0,3g/cm3.

8. Module d'accumulation d'énergie suivant l'une des revendications précédentes, **caractérisé en ce que** la charge ( 10 ) a une surface BET d'au moins 20 m2/g.

9. Module d'accumulation d'énergie suivant l'une des revendications précédentes, **caractérisé en ce que** la charge ( 10 ) a une surface BET d'au moins 100 m2/g.

10. Module d'accumulation d'énergie suivant l'une des revendications précédentes, **caractérisé en ce que** le revêtement catalytique est un métal précieux, de préférence du platine ( Pt ) ou du rhodium ( Rh ).

11. Module d'accumulation d'énergie suivant l'une des revendications précédentes, **caractérisé en ce que** la charge ( 10 ) est du charbon actif qui a une surface BET comprise entre 500 et 2000 m2/g.

12. Module d'accumulation d'énergie suivant la revendication 11, **caractérisé en ce que** le charbon actif est à pores ouverts et le revêtement catalytique est déposé sur les surfaces des pores du charbon actif.

13. Module d'accumulation d'énergie suivant l'une des revendications précédentes, **caractérisé en ce que** la charge ( 10 ) est un zéolithe.

14. Module d'accumulation d'énergie suivant la revendication 13, **caractérisé en ce que** la charge ( 10 ) est du sépiolite.

15. Module d'accumulation d'énergie suivant la revendication 13, **caractérisé en ce que** la charge est du tobermorite.
